Europäisches Patentamt

European Patent Office

Office européen des brevets

(19)

(11) Veröffentlichungsnummer: **0 141 235**
**B1**

(12) **EUROPÄISCHE PATENTSCHRIFT**

(45) Veröffentlichungstag der Patentschrift:
12.10.88

(51) Int. Cl.⁴: **F 16 B 25/00**

(21) Anmeldenummer: **84111319.4**

(22) Anmeldetag: **22.09.84**

(54) Schlitzschraube.

(30) Priorität: **28.09.83 DE 3335092**

(43) Veröffentlichungstag der Anmeldung:
**15.05.85 Patentblatt 85/20**

(45) Bekanntmachung des Hinweises auf die Patenterteilung:
**12.10.88 Patentblatt 88/41**

(84) Benannte Vertragsstaaten:
**AT BE CH FR GB IT LI LU NL SE**

(56) Entgegenhaltungen:
**EP-A-0 024 528**
**DE-A-1 809 094**
**DE-A-3 046 692**
**DE-C-969 106**
**DE-C-2 318 088**
**GB-A-467 169**

(73) Patentinhaber: **Rommel, Erwin, Ringstrasse 11,
D-4320 Hattingen (DE)**

(72) Erfinder: **Der Erfinder hat auf seine Nennung
verzichtet**

(74) Vertreter: **Patentanwälte Dr. Solf & Zapf,
Schlossbleiche 20 Postfach 13 01 13, D-5600
Wuppertal 1 (DE)**

LIBER, STOCKHOLM 1988

## Beschreibung

Die Erfindung betrifft eine gewindeformende Schlitzschraube mit einem sich zumindest teilweise über ihren Schraubenschaft erstreckenden ein- oder mehrgängigen Gewinde, einer Schraubenspitze und einem Schraubenkopf, wobei die die Gewindespitze bildende Kante mindestens teilweise wellenförmig und das Gewinde bis zum Ende der Schraubenspitze verläuft.

Aus der DE-C-2 318 088 ist eine Schraube der eingangs beschriebenen Art bekannt.

Der Erfindung liegt die Aufgabe zugrunde, ausgehend von der eingangs beschriebenen Schraube, diese derart zu verbessern, daß eine Erhöhung des Lösemoments bei vermindertem Eindrehmoment erreicht wird, wobei die Schraube in einem Arbeitsgang mit Gewinde und Schraubenspitze hergestellt werden kann.

Erfindungsgemäß wird dies dadurch erreicht, daß die wellenförmige Gewindespitze auf der Schraubenspitze und mindestens auf dem ersten sich anschließenden Gewindegang des Schraubenschaftes mindestens an ihrer der Schraubenspitze zugekehrten Flankenfläche im Abschnitt der Wellentäler der Kante die Flankenfläche unterbrechende Vertiefungen aufweist, deren obere Begrenzung die Kante ist, und hierzu der Übergang zur übrigen Flankenfläche ohne Kantenbildung etwa parabelförmig verläuft. Erfindungsgemäß ist demnach vorgesehen, daß der wellenförmige Kantenverlauf mit den weiterhin vorgesehenen Vertiefungen an der Gewindegangflanke sich bis zum Ende der Schraubenspitze erstreckt. Hierbei ist wesentlich, daß zumindest ein Gewindegang des Schraubenschaftes ebenfalls erfindungsgemäß ausgebildet ist. Durch diese erfindungsgemäße Ausbildung wirkt die Spitze als eine Art reibendes Werkzeug, so daß ein ähnlicher Effekt wie bei einer Bohrschraube mit einer Bohrspitze erreicht wird, die zunächst ein Kernloch bohrt, in dem beim weiteren Einschrauben das Gewinde durch die folgenden Gewindegänge erzeugt wird. Da bei der erfindungsgemäßen selbstbohrenden Schraube die Gewindeformung unmittelbar an der Spitze der Schraube erfolgt, ergibt sich ein sicheres Zentrieren und Anfassen im Werkstück unmittelbar beim Ansetzen der erfindungsgemäßen Schraube. Darüber hinaus ermöglicht die erfindungsgemäße Ausgestaltung die Herstellung der Schraube in einem einzigen Arbeitsgang, da eine einheitliche Ausbildung über den gesamten Schraubenbereich, d. h. sowohl an der Schraubenspitze als auch am Schraubenschaft, vorhanden ist. Durch die in den Flankenflächen vorgesehenen Vertiefungen, die unmittelbar an die die Gewindespitze bildende Kante angrenzen, hat die erfindungsgemäße Schraube materialverdrängende bzw. materialfurchende Eigenschaften. Dabei ergibt sich durch das in ständiger Folge entsprechend der Wellung und den Vertiefungen auftretende abschwellende und anschwellende Drehmoment insgesamt eine Verringerung des Eindrehmoments, wobei diese Verringerung in einer Größenordnung von 30 % gegenüber den bisher bekannten Schrauben liegt. Hierdurch entsteht eine geringere Wärmeentwicklung beim Eindrehen der Schraube, was insbesondere bei Kunststoffmaterialien vorteilhaft ist, da somit eine plastische Verformung der Kunststoffmaterialien aufgrund Wärmeeinwirkung beim Einschrauben der Schraube verhindert wird. Zudem ergibt sich aber überraschenderweise auch eine Erhöhung des Lösemoments, was auf die vorhandenen erfindungsgemäßen Vertiefungen zurückgeführt werden kann. Das beim Eindrehen der Schraube durch die zwischen den Vertiefungen liegenden Erhöhungen verdrängte Material kann in die vorhandenen Vertiefungen ausweichen und stellt dort für diese eine Widerstandserhöhung dar. Diese Wirkung war aber für den Fachmann durchaus nicht naheliegend, da er grundsätzlich davon ausgeht, daß bei einer Verringerung des Eindrehmoments auch eine Verringerung des Lösemoments entsteht.

Aus der US-A-3 742 541 sind selbstschneidende Schrauben bekannt, deren Gewindegänge, ausgehend von der Gewindespitze, V-förmige Einschnitte aufweisen. Hierbei entstehen aber Schneidkanten, wodurch eine Spanbildung auftritt. Erfindungsgemäß werden derartige Schneidkanten aber durch-den kontinuierlichen Übergang ohne Kantenbildung im Bereich zwischen den Vertiefungen und der übrigen Flankenfläche gerade vermieden. Auch ist auf der Gewindespitze ein kontinuierlicher Übergang zwischen Wellental und Wellenberg vorhanden, so daß ein Verdrängungseffekt im Material und kein Spaneffekt erzeugt wird.

Weitere vorteilhafte Ausführungsformen sind in den Unteransprüchen enthalten. Anhand der in den beiliegenden Zeichnungen dargestellten Ausführungsbeispiele wird die Erfindung nun näher erläutert. Es zeigen:

Fig. 1    eine Seitenansicht einer erfindungsgemäßen Schraube,

Fig. 2    eine Ansicht in Richtung des Pfeils X in Fig. 1,

Fig. 3    eine Abwicklung eines Teilbereichs eines Gewindeganges einer erfindungsgemäßen Schraube,

Fig. 4    eine Seitenansicht einer weiteren Ausgestaltung einer erfindungsgemäßen Schraube,

Fig. 5    eine Ansicht in Richtung des Pfeils V in Fig. 3 bei einer Ausgestaltung gemäß Fig. 4.

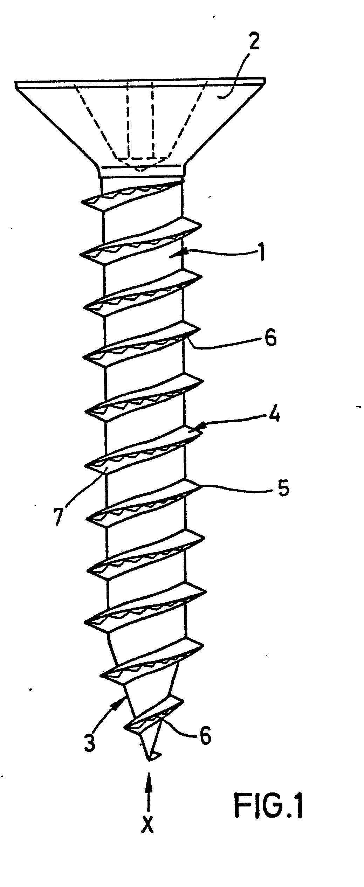

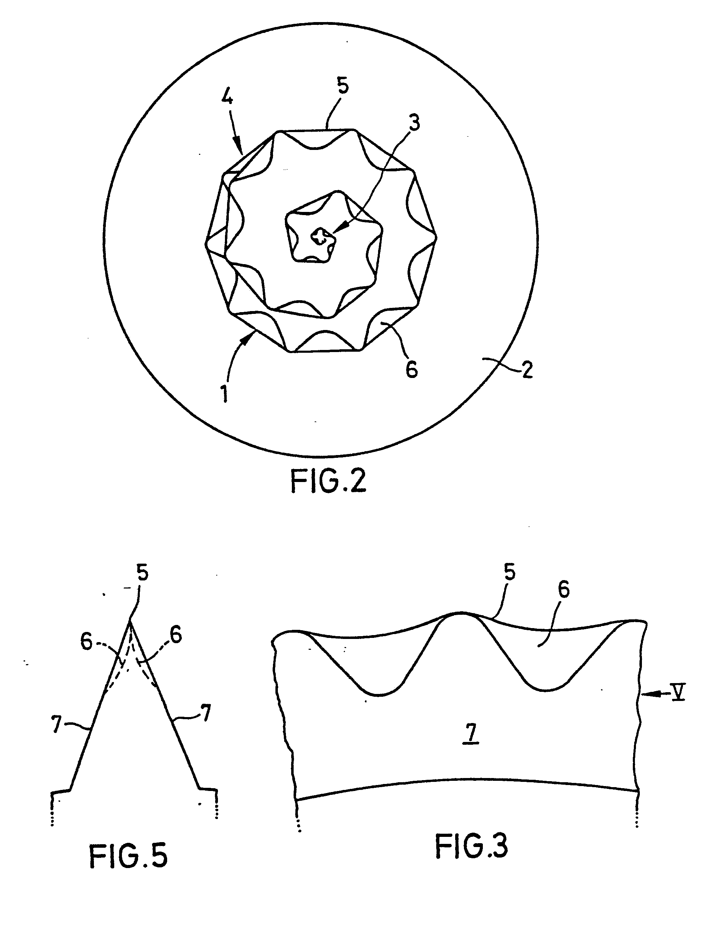

Wie sich aus Fig. 1 ergibt, besteht eine erfindungsgemäße Schraube aus einem Schraubenschaft 1, einem Schraubenkopf 2 und einer Schraubenspitze 3. Der Schraubenschaft 1 weist einen über seine gesamte Länge gleichen Durchmesser auf, und die Schraubenspitze 3 verjüngt sich vom Schraubenschaft kontinuierlich bis zu ihrem Ende hin. Am Schraubenschaft 1 und an der Schraubenspitze 3 ist ein Schraubgewinde 4 ausgebildet, das bis zum Ende der Schraubenspitze 3 verläuft. Die die Gewindespitze bildende Kante 5 der das Gewinde 4 bildenden Gewindegänge verläuft wellenförmig, d. h. es ist eine stetige Folge von Erhöhungen und Vertiefungen vorhanden, wobei der Gewindeaußendurchmesser durch den Abstand der Gewindekante 5 von der Mittelachse der Schraube im Bereich des Wellenbergs bestimmt wird. Weiterhin sind an der der Schraubenspitze zugekehrten Flanke 7 der Gewindegange jeweils im Bereich der Wellentäler Vertiefungen 6 ausgebildet. Hierbei bildet die Kante 5 im Bereich des Wellentals die obere Begrenzung und der Übergang zur übrigen Flankenfläche der Flanke ist etwa parabelförmig ausgebildet. Hiermit ergibt sich eine Ausgestaltung, wie sie bereits bei Messern als sogenannter Wellenschliff bekannt ist. Wesentlich ist hierbei, daß sich diese Ausgestaltung des Gewindegangs bis zum Ende der Schraubenspitze fortsetzt. Dabei ergibt sich eine Teilung für die Vertiefungen 6 über einen Gewindegang von etwa acht bis dreizehn Vertiefungen 6. Dabei ist erfindungsgemäß vorgesehen, daß diese Teilung der Vertiefungen im gesamten Gewindebereich, also auch auf der Schraubenspitze 3, vorhanden ist. Hierdurch ergibt sich im Bereich der Gewindegänge der Schraubenspitze ein immer enger werdender Abstand der einzelnen Vertiefungen und eine vergleichsweise zum übrigen Bereich dichtere Folge der zwischen den Vertiefungen liegenden Abschnitte, so daß eine Art reibende Oberfläche dort entsteht und beim Einschrauben eine Reibwirkung erzielt wird, die ein sicheres Zentrieren und Anfassen am Werkstück ermöglicht, ohne daß ein Vorbohren erforderlich wäre. Damit wird durch die erfindungsgemäß ausgestaltete Schraube erreicht, daß keine separate Bohr- oder Greifspitze ausgebildet werden muß. Die Tiefe der Vertiefungen 6 kann zweckmäßigerweise 1/3 bis 1/2 der Gewindehöhe H betragen. Insbesondere aus Fig. 3 ist die erfindungsgemäße Gestaltung des Gewindegangs ersichtlich. Dabei ist klar erkennbar, daß zwischen den Vertiefungen 6 und dem übrigen Flankenbereich ein fließender Übergang vorhanden ist, so daß hier keine scharfen Kanten entstehen und somit eine spanende Wirkung verhindert wird. Entsprechendes gilt auch für den Übergang zwischen den Wellentälern und -bergen der Kante 5.

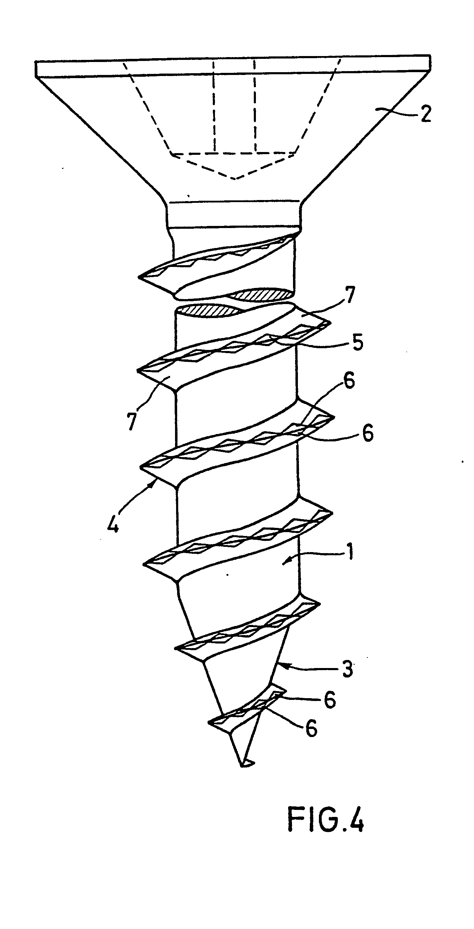

In Fig. 4 und 5 ist eine weitere Ausgestaltung der erfindungsgemäßen Schraube dargestellt, wobei gleiche Teile wie in den vorhergehenden Figuren mit denselben Bezugsziffern versehen sind. Im Unterschied zu der Ausführungsform gemäß den vorhergehenden Figuren sind hier die Vertiefungen 6 auf beiden Flankenflächen 7 der Gewindegänge ausgebildet, wodurch die furchende Wirkung der erfindungsgemäßen Schraube noch verbessert werden kann. Auch hier erstreckt sich diese Ausbildung über den gesamten Bereich des Gewindes 4, d. h. auch bis zum Ende der Schraubenspitze.

**Patentansprüche**

1. Gewindeformende Schlitzschraube mit einem sich zumindest teilweise über ihren Schraubenschaft (1) erstreckenden ein- oder mehrgängigen Gewinde (4), einer Schraubenspitze (3) und einem Schraubenkopf (2), wobei die die Gewindespitze bildende Kante (5) mindestens teilweise wellenförmig und das Gewinde (4) bis zum Ende der Schraubenspitze verläuft, dadurch gekennzeichnet, daß die wellenförmige Gewindespitze auf der Schraubenspitze (3) und mindestens auf dem ersten sich anschließenden Gewindegang des Schraubenschaftes (1) mindestens an ihrer der Schraubenspitze (3) zugekehrten Flankenfläche (7) im Abschnitt der Wellentäler der Kante (5) die Flankenfläche (7) unterbrechende Vertiefungen (6) aufweist, deren obere Begrenzung die Kante (5) ist, und hierzu der Übergang zur übrigen Flankenfläche ohne Kantenbildung etwa parabelförmig verläuft.

2. Schraube nach Anspruch 1, dadurch gekennzeichnet, daß der Abstand der Vertiefungen (6) im Bereich der Schraubenspitze (3) zum spitzen Ende hin kleiner wird.

3. Schraube nach Anspruch 1 oder 2, dadurch gekennzeichnet, daß die Vertiefungen (6) einander gegenüberliegend auf beiden Flankenflächen (7) des Gewindeganges ausgebildet sind.

4. Schraube nach einem oder mehreren der Ansprüche 1 bis 3, dadruch gekennzeichnet, daß etwa acht bis dreizehn Vertiefungen (6) pro einer Windung des Gewindes (4) ausgebildet sind.

5. Schraube nach einem oder mehreren der Ansprüche 1 bis 4, dadurch gekennzeichnet, daß die Tiefe der Vertiefungen (6) etwa 1/3 bis 1/2 der Gewindehöhe (H) entspricht.

**Claims**

1. Thread-forming slot screw with a single-start or multistart thread (4) extending at least partly over its screw shank (1), a screw tip (3) and a screw head (2), whereby the edge (5) forming the crest of the thread extends at least partly in an undulating manner and the thread (4) extends as far as the end of the screw tip, characterised in that the undulating crest of the thread on the screw tip (3) and at least on the first adjoining thread of the screw shank (1), at least on its flank surface (7) facing the screw tip (3), in the section of the wave troughs of the edge (5), comprises recesses (6) interrupting the flank face (7), whereof the upper boundary is the edge (5) and for this the transition to the remaining flank surface extends without the formation of an edge approximately in the form of a parabola.

2. Screw according to Claim 1, characterised in that the distance between the recesses (6) in the region of the screw tip (3) becomes smaller towards the pointed end.

3. Screw according to Claim 1 or 2, characterised in that the recesses (6) are constructed to lie opposite each other on both flank surfaces (7) of the thread.

4. Screw according to one or more of claims 1 to 3, characterised in that approximately eight to thirteen recesses (6) are formed per turn of the thread (4).

5. Screw according to one or more of claims 1 to 4, characterised in that the depth of the recesses (6) corresponds to approximately one third to one half of the height of the thread (H).

**Revendications**

1. Vis à rainure de façonnage de filetage avec un filetage (4) à pas simple ou multiple s'étendant au moins partiellement sur la tige de vis, une pointe (3) et une tête (2) sur laquelle l'arête (5) formant la pointe du filetage est au moins partiellement ondulée, et le filetage s'étend jusqu'à l'extrémité de la pointe de la vis caractérisé en ce que la pointe ondulée du filetage présente des évidements (6) interrompant la surface du flan (7), sur la pointe (3) de la vis et au moins sur le premier pas de vis adjacent de la tige de vis (1), au moins sur sa surface de flan (7) orientée vers la pointe (3) de la vis, dans la section des creux des ondulations de l'arête, la limite supérieure des évidements étant l'arête (5) et à cet effet, la transition vers le reste de la surface de flan se faisant sensiblement en forme de parabole sans formation d'arête.

2. Vis selon la revendication 1, caractérisée en ce que l'écart des évidements (6) dans la zone de la pointe (3) de la vis diminue en se rapprochant de l'extrémité de la pointe.

3. Vis selon une des revendications 1 ou 2, caractérisée en ce que les évidements (6) sont formés sur les deux surfaces des flancs (7) du filet, en regard les uns des autres.

4. Vis selon une ou plusieurs des revendications précédentes, caractérisée en ce que environ huit à treize évidements (6) sont formés pour un pas du filet (4).

5. Vis selon une ou plusieurs des revendications précédentes, caractérisé en ce que la profondeur des évidements (6) correspond à environ 1/3 à 1/2 de la hauteur H du filet.

FIG.1

FIG.2

FIG.5

FIG.3

**FIG.4**